# EUROPÄISCHE PATENTSCHRIFT

(11) **EP 1 769 990 B1**
(45) Veröffentlichungstag und Bekanntmachung des Hinweises auf die Patenterteilung: **02.11.2011**
(21) Anmeldenummer: 06019886.8
(22) Anmeldetag: 22.09.2006
(51) Int. Cl.: B60T 8/32

(54) **System zur Schlupfregelung bei einem einspurigen Kraftfahrzeug und Motorrad mit einem derartigen System**
Slip control system for a single track vehicle and motor cycle with such a system
Système de régulation antipatinage pour un véhicule à voie unique et motocyclette avec un tel système

(30) Priorität: 30.09.2005 DE 102005047143
(43) Veröffentlichungstag der Anmeldung: 04.04.2007
(73) Patentinhaber: Bayerische Motoren Werke Aktiengesellschaft, 80809 München (DE)
(72) Erfinder: Wagner, Hans-Albert, 81737 München (DE); Kirchberger, Andreas, 85778 Haimhausen (DE); Beulich, Siegfried, 82393 Iffeldorf (DE); Hamm, Markus, 85737 Ismaning (DE); Jahreiß, Hans-Jürgen, 82205 Gilching (DE)

(56) Entgegenhaltungen:
- EP-A2- 0 370 469
- DE-A1- 3 629 815
- DE-A1- 4 000 212
- DE-A1- 19 632 827
- GB-A- 2 234 303
- US-A- 5 618 088

## Beschreibung

Die Erfindung betrifft ein System zur Schlupfregelung bei einem einspurigen Kraftfahrzeug sowie ein Motorrad umfassend ein derartiges System.

Aus der DE 196 32 827 A1 ist ein Motorroller mit einem aktiv gesteuerten Fahrwerk bekannt, das ein hydraulisches Zweischeiben-Bremssystem mit integriertem Antiblockiersystem und einer Traktionshilfe aufweist. Mittels eines Rechners wird die aktuelle Fahrzeuggeschwindigkeit überwacht. Bei einer Kurvenfahrt wird am Kurveneingang der eingeschlagene Lenkwinkel und die gewählte Schräglage überwacht. Bei einer zu geringen Schräglage erfolgt ein Regeleingriff, wodurch die Geschwindigkeit des Fahrzeugs verringert wird.

Bei Motorrädern führt zu hoher Radschlupf in der Regel zu einem unkontrollierbaren Fahrverhalten beziehungsweise einer Instäbilität des Fahrzeugs. Der auftretende Schlupf an Vorder- und/oder Hinterrad ist auch von einem geübten Fahrer nur in Ausnahmefällen, wie bei einer Geradeausfahrt im Einzelfall beherrschbar. Ein zu hoher Schlupf (unterschiedliche Radgeschwindigkeit an Vorder- und Hinterrad) kann aufgrund zu großer Brems- oder Beschleunigungskräfte an den Rädern auftreten.

Herkömmliche Schlupfregelsysteme sind hinreichend in Form von Antiblockierregelsystemen (ABS) und Antriebs-Schlupf-Regelsystemen (ASR Antriebs-Schlupf-Regelung, ASC automatic stability control) bekannt. Dabei wird mittels Antiblockiersystemen ein Blockieren der Räder bei einem Bremsvorgang unterbunden, während bei einem sogenannten Antischlupfsystem das ungewollte Durchdrehen eines Antriebsrades während eines Beschleunigungsvorgangs vermieden wird. Beiden Systemen liegt die (Aus-)Regelung eines Schlupfes zwischen mindestens zwei zu vergleichenden Rädern (Radgeschwindigkeiten) zugrunde.

Aus der DE 42 44 112 C2 ist bereits ein Schlupfregelsystem in Form eines Antiblockiersystems für Motorräder bekannt, bei dem der Schräglagenwinkel des Motorrades bei Kurvenfahrt ermittelt wird und falls dieser einen vorgegebenen Wert überschreitet, den ABS-Regler durch Steuersignale veranlasst, den Bremsdruck am Vorderrad auf einen Wert zu beschränken, der kleiner ist als der zu erwartende Blockierdruck. Mit zunehmender Schräglage wird der Bremsdruck auf einen immer geringeren Wert reduziert. Hierdurch wird eine Blockierschutzregelung erreicht, die sich dynamisch an den Grad der erreichten Schräglage anpasst.

Ferner ist aus der DE 102 35 378 A1 ein Verfahren zur Bremsenregelung bei einem einspurigen Kraftfahrzeug bekannt, bei dem mittels Gierratensensor eine Seitenneigung erfasst wird und eine Bremsenregelung in Abhängigkeit von der erkannten Seitenneigung erfolgt.

Auf die verwendeten und aus dem Stand der Technik bereits hinlänglich bekannten Sensoren zur Ermittlung der Schräglagen wird im Folgenden nicht weiter eingegangen.

Der Erfindung liegt die Aufgabe zugrunde, ein Schlupfregelsystem für ein einspuriges Kraftfahrzeug zu schaffen, welches im Hinblick auf die Schlupfregelung bei Seitenneigung (Schräglage) des Fahrzeugs verbessert ist.

Erfindungsgemäß wird die Aufgabe durch die Gesamtheit der Merkmale des Anspruchs 1 gelöst. In abhängigen Ansprüchen sind bevorzugte Weiterbildungen der Erfindung angegeben. Anspruch 6 beschreibt ein Motorrad ausgestattet mit einem erfindungsgemäßen System.

Gemäß der Erfindung wird parallel das Auftreten eines Radschlupfes sowie das Auftreten von Schräglage beim Durchfahren einer Kurve überwacht, und für den Fall, dass bei einer detektierten Schräglage bei Kurvenfahrt ein Radschlupf detektiert wird, wird über eine Steuereinrichtung ein Steuersignal zur automatischen Ansteuerung eines Aktuators erzeugt. Erfindungsgemäß wird über den über die Steuereinrichtung angesteuerten Aktuator automatisch ein zusätzliches Lenkmoment erzeugt, welches der, durch den Radschlupf auftretenden Drehbewegung des Fahrzeugs um eine Vertikalachse senkrecht zur Fahrbahn entgegenwirkt und so das Fahrzeug stabilisiert. Die automatische (Gegen-)Steuerung erfolgt solange, bis ein vorgegebener Grenzwert für den überwachten Radschlupf erreicht bzw. unterschritten worden ist.

In einer Weiterbildung der Erfindung ist zusätzlich ein Gierratensensor vorhanden, über den eine durch den Radschlupf erzeugte Drehbewegung des Fahrzeugs (z.B. durch Wegrutschen von Hinter- oder Vorderrad) detektierbar ist. In diesem Fall ist die Steuereinrichtung derart ausgebildet, dass die automatische Erzeugung des zusätzlichen Lenkmoments (Gegenlenkmoment) in Abhängigkeit vom Ausgangssignal des Gierratensensors erfolgt. Hierdurch kann gezielt, je nach auftretender Drehbewegung des Fahrzeugs ein mehr oder weniger starkes Lenkmoment erzeugt werden.

In bevorzugten Weiterbildungen der Erfindung ist die Aktuatorik zur Erzeugung des (Gegen-)Lenkmoments als steuerbarer und in seiner Dämpfung veränderbarer Lenkungsdämpfer, als steer-by-wire Lenksystem, als Doppelscheibenbremse, die in ihrer Betätigung bezüglich der linken und der rechten Scheibenbremse individuell unterschiedlich ansteuerbar ist, ausgebildet. Auch eine Kombination von zwei der drei vorbeschriebenen oder eine Kombination aller drei vorbeschriebenen Aktuatorsysteme ist denkbar. Alle vorgestellten Aktuatorsysteme eignen sich besonders gut ein gesteuertes Gegenlenkmoment in kürzester Zeit bereit zu stellen und hierdurch das Fahrzeug zu stabilisieren.

Mit Vorteil sind die Mittel zur Erfassung des Radschlupfes durch eine Drehratensensorik gebildet, über die der Rollwinkel von Vorder- und Hinterrad beziehungsweise die auftretende Rollwinkeldifferenz erfasst wird.

Zusätzlich kann die Ermittlung des Fahrzeuggrenzbereiches ermittelt werden. Hierfür sind Mittel zur Erfassung der Fahrzeugquerbeschleunigung (im Folgenden Querbeschleunigungssensor genannt) und/oder Mittel zur Erfassung der Lenkwinkelbeschleunigung (im Folgenden Lenkwinkelbeschleunigungssensor genannt) und/oder Mittel zur Erfassung des Lenkwinkels (im Folgenden Lenkwinkelsensor genannt) vorhanden, über die ein entsprechender Fahrzeug- Beziehungsweise Reifengrenzbereich ermittelbar ist. Der automatische Eingriff in die Fahrzeugsteuerung kann hierdurch wesentlich verbessert (präzisiert) vorgenommen werden.

Mit Vorteil ist die Steuereinrichtung derart ausgebildet, dass der automatische Eingriff in die Fahrzeugsteuerung zur Erzeugung einer Gegenlenkbewegung bzw. eines Gegenlenkmoments in Abhängigkeit von der aktuell verwendeten Reifenspezifikation (Reifentyp) erfolgt. Hierdurch kann bereits vorab, ein während einer Kurvenfahrt aufgrund der unterschiedlichen Reifengeometrien von Vorder- und Hinterrad auftretender Radschlupf zwischen Vorder- und Hinterrad berücksichtigt und diesem ggf. bereits durch ein in Abhängigkeit von der Schräglage berechnetes Gegenlenkmoment entgegengewirkt werden.

Ausführungsbeispiele der Erfindung sind in der Zeichnung dargestellt und im Folgenden näher beschrieben. Es zeigen:
- Figur 1:: ein Motorrad in stark schematisierter Darstellung umfassend ein System gemäß der Erfindung, und
- Figur 2:: das erfindungsgemäße System in einem stark schematisierten Blockschaltbild.

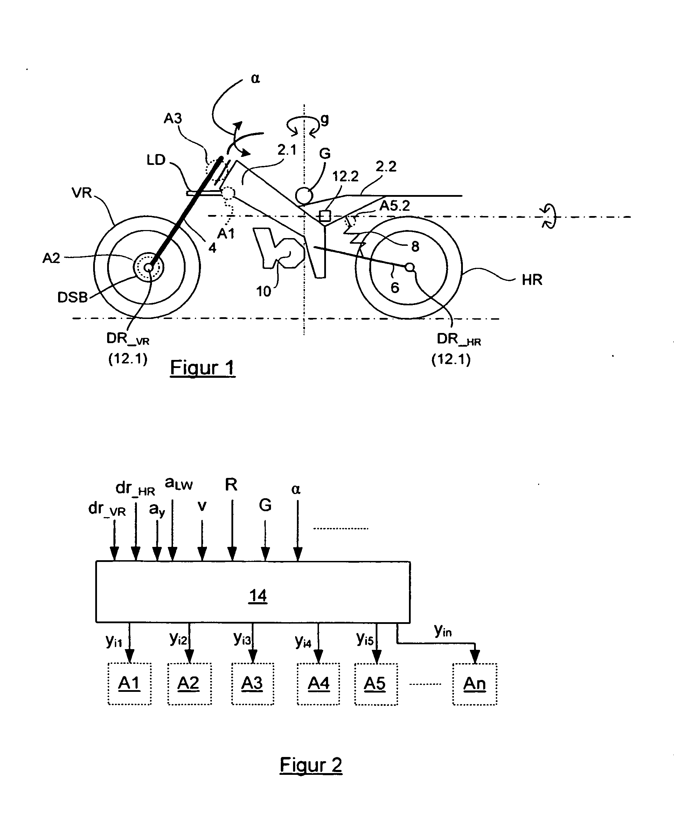

Figur 1 zeigt ein Motorrad mit einem Hauptrahmen 2.1 einem fest mit dem Hauptrahmen 2.1 verbundenen Rahmenheckteil 2.2, einem über eine Vorderradführung 4 (beispielsweise in Form einer herkömmlichen Teleskopgabel, einer BMW Telelever Vorderradführung, einer BMW Duolever Vorderradführung oder dergleichen) mit dem Hauptrahmen 2.1 verbundenen Vorderrad VR, einem über eine Hinterradführung 6 beispielsweise in Form einer Hinterradschwinge (Einarm- oder Zweiarmschwinge oder dergleichen) und einem hinteren Feder/Dämpferelement 8 mit dem Haupt- bzw. Heckrahmen 2.1, 2.2 verbundenen Hinterrad HR sowie mit einem am Hauptrahmen 2.1 befestigten Antriebsmotor 10.
Gemäß der vorliegenden Erfindung umfasst das System zur Regelung (Ausregelung) eines auftretenden Radschlupfes Mittel 12.1 zur Erfassung des zwischen Vorder- und Hinterrad gegebenenfalls auftretenden Radschlupfes sowie Mittel 12.2 zur Erfassung der Schräglage (Schräglagenwinkel gegenüber der Fahrbahn) des Motorrades während einer Kurvenfahrt. Insbesondere umfassen die Radschlupferfassungsmittel 12.1 einen Drehratensensor DR_{_VR} für das Vorderrad VR und einen Drehratensensor DR_{_HR} für das Hinterrad HR über die die Drehrate dr_{_VR}, dr_{_HR} der beiden Räder und damit die Drehratendifferenz und der sich hieraus ergebende Radschlupf ermittelt werden können. Zur Ermittlung des Fahrzeug- beziehungsweise Reifengrenzbereichs (bei dem das Fahrzeug gerade noch stabil fahrbar ist) kann zusätzlich ein Lenkwinkelbeschleunigungssensor zur Erfassung der Lenkwinkelbeschleunigung a_{LW} der Vorderradführung 4, ein Fahrzeugquerbeschleunigungssensor zur Ermittlung der Fahrzeugbeschleunigung a_{y} (seitlich) quer zur Fahrtrichtung oder ein Lenkwinkelsensor zur Ermittlung des Lenkwinkels vorhanden sein.

Ferner ist eine Steuereinrichtung 14 vorhanden, die in Abhängigkeit von Signalen der Erfassungsmittel 12.1 und 12.2 einen oder mehrere Aktuatoren A1, ..., An ansteuert um einem aufgetretenen Radschlupf durch Erzeugung eines Gegenlenkmoments bzw. einer Gegenlenkbewegung entgegen zu wirken. Vorzugsweise ist die Steuereinrichtung 14 derart ausgebildet, dass eine Ansteuerung der Aktuatoren A1, ..., An erst bei Überschreiten einer vorgegebenen Grenzgeschwindigkeit (Mindestgeschwindigkeit) des Fahrzeugs erfolgen kann. Im dargestellten Ausführungsbeispiel werden der Steuereinrichtung 14 neben dem Ausgangssignal der Erfassungsmittel 12.1 und 12.2 weitere Eingangsgrößen zur Verarbeitung zugeführt. Die Steuereinrichtung 14, die Erfassungsmittel 12 sowie die Aktuatoren A1, ..., An oder andere elektrische/elektronische Fahrzeugkomponenten sind vorzugsweise über ein Bussystem miteinander verbunden.

Wie auch in Figur 2 veranschaulicht, sind weitere Eingangsgrößen der Steuereinrichtung 14 zugeführt, wie beispielsweise die Gierrate g (Drehbewegung des Fahrzeugs um Vertikalachse), die aktuelle Fahrzeuggeschwindigkeit v und/oder die aktuell verwendete Reifenspezifizierung (Reifentyp) R.

Je nach ermitteltem Radschlupf wird durch die Steuereinrichtung 14 ein Stellsignal yᵢ; yᵢ₁ ... yᵢₙ erzeugt, über das ein oder mehrere Aktuatoren A; A1, ..., An zur gezielten Gegensteuerung (durch Erzeugung eines Gegenlenkmoments bzw. einer Gegenlenkbewegung) angesteuert werden. Im einzelnen können diese Aktuatoren A1, ..., An durch verschiedene Stellglieder realisiert sein. Insbesondere können Stellglieder bzw. Aktuatoren A1 in Form eines elektronisch steuerbaren Lenkungsdämpfers LD vorhanden sein, der aufgrund der Ansteuerung in seinen Dämpfungseigenschaften veränderbar, insbesondere in der Viskosität seiner Dämpferflüssigkeit einstellbar ist. Hierdurch kann entweder die für eine Lenkbewegung erforderliche Lenkkraft (Veränderung des Lenkmoments / Erzeugung eines Gegenlenkmoments) verändert oder gezielt auch eine zusätzliche Gegenlenkbewegung initiiert werden. Alternativ oder zusätzlich kann eine Aktuatorik A3 in Form eines steer-by-wire Lenksystems vorhanden sein, über welches automatisch über die Steuereinrichtung 14 Gegenlenkimpulse bzw. -momente erzeugbar sind, die dem aufgetretenen Radschlupf entgegenwirken. Alternativ oder zusätzlich kann auch vorgesehen sein Aktuatoren A2 in Form einer Bremssteuerung für eine Doppelscheibenbremse DSB eines Rades (insbesondere des Vorderrades) vorzusehen, wobei deren zwei Bremsscheiben mit unterschiedlichem Bremsmoment beaufschlagt werden und so gezielt ein Gegenlenkmoment bzw. eine Gegenlenkbewegung induziert wird.
Figur 2 veranschaulicht anhand des schematisch dargestellten Systems gemäß der Erfindung noch einmal deren Wirkungsweise. Die Steuereinrichtung 14 erhält neben den Signalen der Radschlupferfassungsmittel 12.1 (Signal dr_{_VR}, dr_{_HR} der Drehratensensoren DR_{_VR}, DR_{_HR}, Signal a_{LW} des Lenkwinkelbeschleunigungssensors, Signal a_{y} des Querbeschleunigungssensors und/oder Signal α des Lenkwinkelsensors) verschiedenste zusätzliche Eingangsgrößen, wie die auftretende Gierrate (für die Drehbewegung des Fahrzeugs um eine vertikal zur Fahrbahn verlaufende Fahrzeugachse), die Art des montierten Reifentyps R oder die aktuelle Fahrzeuggeschwindigkeit v. In Abhängigkeit von einem zumindest anhand der Drehraten DR_{_VR}, DR_{_HR} von Vorderund Hinterrad detektierten Radschlupf und der aktuellen Fahrzeugschräglage wird über die Steuereinrichtung 14 über einen oder mehrere Aktuatoren A1....An durch eine automatische Fahrzeugsteuerung, insbesondere durch automatische Einstellung der Viskosität des Lenkungsdämpfers LD und/oder automatischen Eingriff in die Lenkung des Fahrzeugs mittels steer-by-wire und/oder durch automatische unterschiedliche Bebremsung der beiden Scheiben einer Doppelscheibenbremse (insbesondere Vorderrad-Doppelscheibenbremse) dem aufgetretenen Radschlupf gezielt entgegengewirkt. Durch das erfindungsgemäße System kann die Fahrsicherheit bei Einspurfahrzeugen erheblich verbessert werden. Die Fahrzeugstabilität wird signifikant erhöht und das Fahrzeug wird erheblich unempfindlicher gegenüber einem ungeeigneten Reifentyp oder schlechten Fahrbahnbelägen.

## Patentansprüche

1. System zur Regelung des Radschlupfes bei einem einspurigen Kraftfahrzeug, insbesondere Motorrad, umfassend
- Mittel (12.1) zur Erfassung des Radschlupfes,
- Mittel (12.2) zur Erfassung der Schräglage während einer Kurvenfahrt,
- sowie eine Steuereinrichtung (14) die derart ausgebildet ist, dass bei Auftreten eines Radschlupfes bei einer detektierten Schräglage bei kurvenfahrt des Kraftfahrzeugs ein Steuersignal (yᵢ₁.... yᵢₙ) zur Ansteuerung eines Aktuators (A1....An) erzeugbar ist, wobei der mindestens eine Aktuator (A1....An) derart ausgebildet ist, dass ein automatischer Eingriff in die Fahrzeugsteuerung realisierbar ist derart, dass ein Lenkmoment erzeugbar ist, durch das einer, aufgrund des Radschlupfes unmittelbar bevorstehenden oder einer tatsächlich erfolgten Drehbewegung des Fahrzeugs um eine Vertikalachse des Fahrzeugs senkrecht zur Fahrbahnebene, entgegengewirkt wird.

2. System nach Anspruch 1,
**gekennzeichnet durch** einen Gierratensensor (G) zur Erfassung der Drehbewegung des Fahrzeugs, welche aufgrund eines bei Kurvenfahrt auftretenden Radschlupfes hervorgerufen wurde, wobei die Steuereinrichtung (14) derart ausgebildet ist, dass der automatische Eingriff in die Fahrzeugsteuerung in Abhängigkeit von dem Ausgangssignal (g) des Gierratensensors (G) erfolgt.

3. System nach einem der vorstehenden Ansprüche, **dadurch gekennzeichnet, dass** der mindestens eine Aktuator (A1....An)
- einen steuerbaren Lenkungsdämpfers (LD) umfasst, und/oder
- ein steer-by-wire System umfasst, und/oder
- eine Doppelscheibenbremsanlage (DSB) umfasst, bei der durch vorwiegend einseitige Betätigung der Bremsanlage ein Gegenlenkmoment bzw. eine Gegenlenkbewegung initiiert wird, um der aufgrund des Radschlupfes aufgetretenen Drehbewegung des Fahrzeugs entgegen zu wirken.

4. System nach einem der vorstehenden Ansprüche, **dadurch gekennzeichnet, dass** die Mittel (12.1) als Mittel zur Ermittlung eines Fahrzeuggrenzbereiches umfassen:
- Mittel zur Erfassung der Fahrzeugquerbeschleunigung (ay),
- und/oder Mittel zu Erfassung der Lenkwinkelbeschleunigung (a_{Lw}),
- und/oder Mittel zu Erfassung des Lenkwinkels (α).

5. System nach einem der vorstehenden Ansprüche, **dadurch gekennzeichnet, dass** der Eingriff in die Fahrzeugsteuerung in Abhängigkeit von der verwendeten Reifenspezifikation (R) erfolgt.

6. Motorrad umfassend ein System zur Regelung des Radschlupfes bei einem einspurigen Kraftfahrzeug gemäß einem der vorstehenden Ansprüche.

## Claims

1. A system for controlling the wheel slip in a single-track motor vehicle, especially motorcycle, comprising
- means (12.1) for detecting the wheel slip,
- means (12.2) for detecting the inclined position when cornering,
- and a control device (14), which is configured in such a way that on occurrence of a wheel slip upon a detected inclined position when the motor vehicle is cornering, a control signal (yᵢₗ...- yᵢₙ) can be generated to activate an actuator (Al.... An), wherein the at least one actuator (Al.... An) is configured in such a way that an automatic intervention into the vehicle control can be realised in such a way that a steering torque can be generated, by means of which a rotational movement of the vehicle, which has actually taken place or is immediately imminent because of the wheel slip, about a vertical axis of the vehicle perpendicular to the road plane, is counteracted.

2. A system according to claim 1,
**characterised by** a yaw rate sensor (G) for detecting the rotational movement of the vehicle, which was caused by a wheel slip occurring during cornering, the control device (14) being configured in such a way that the automatic intervention into the vehicle control takes place as a function of the starting signal (g) of the yaw rate sensor (G).

3. A system according to any one of the preceding claims, **characterised in that** the at least one actuator (Al.... An)
- comprises a controllable steering damper (LD),
and/or
- comprises a steer-by-wire system, and/or
- a double disc brake system (DSB), in which a counter-steering torque or a counter-steering movement is initiated by a predominantly one-sided actuation of the brake system in order to counteract the rotary movement of the vehicle occurring because of the wheel slip.

4. A system according to any one of the preceding claims, **characterised in that** the means (12.1), as means for determining a vehicle limit range, comprise:
- means for detecting the vehicle lateral acceleration (a_{y}).
- and/or means for detecting the steering angle acceleration (a_{LW}),
- and/or means for detecting the steering angle (α).

5. A system according to any one of the preceding claims, **characterised in that** the intervention into the vehicle control takes place depending on the tyre specification (R) used.

6. A motorcycle comprising a system for controlling the wheel slip in a single-track motor vehicle according to any one of the preceding claims.

## Revendications

1. Système de régulation du patinage de roue dans le cas d'un véhicule à une voie notamment d'un motocycle comprenant :
- des moyens (12.1) pour saisir le patinage de roue,
- des moyens (12.2) pour saisir la position inclinée sur un trajet en courbe,
- ainsi qu'une installation de commande (14) réalisée pour que lorsque se produit un patinage de roues pour une position inclinée, détectée sur un trajet en courbe du véhicule, elle génère un signal de commande (yᵢ₁.... Yᵢₙ) pour commander un actionneur (A1....An),
* un actionneur (Al....An) étant réalisé pour intervenir automatiquement dans la commande du véhicule de façon à générer un couple de direction qui s'oppose à un mouvement de rotation du véhicule du fait du patinage de roue, qui est sur le point de se produire ou qui s'est effectivement produit, autour de l'axe vertical du véhicule, perpendiculaire au plan de la chaussée.

2. Système selon la revendication 1,
**caractérisé par**
un appareil de capteur de vitesse de lacet (G) pour saisir le mouvement de rotation du véhicule provoqué par le patinage de roue produit sur le trajet en courbe,
* l'installation de commande (14) étant réalisée pour que l'action automatique sur la commande du véhicule se fasse en fonction du signal de sortie (g) fourni par le capteur de vitesse de lacet (G).

3. Le système selon l'une des revendications précédentes,
**caractérisé en ce que**
au moins un actionneur (A1....An),
comprend :
- un amortisseur de direction (LD) commandé et/ ou un
- système de commande par câble et/ou une
- installation de frein à double disque (DSB) qui du fait de l'actionnement principalement unilatéral de l'installation de frein lance un couple de direction antagoniste ou un mouvement de direction antagoniste pour s'opposer au mouvement de rotation du véhicule engendré par le patinage de roue.

4. Système selon l'une des revendications précédentes,
**caractérisé en ce que**
les moyens (12.1) comme moyens pour déterminer une plage limite du véhicule comprennent :
- des moyens pour saisir l'accélération transversale du véhicule (a_{y}),
- et/ou des moyens pour saisir l'accélération angulaire de direction (a_{Lw}),
- et/ou des moyens pour saisir l'angle de direction (α).

5. Système selon l'une des revendications précédentes,
**caractérisé en ce que**
l'intervention sur la commande du véhicule se fait en fonction de la spécification (R) des pneumatiques utilisés.

6. Motocycle comportant un système de régulation du patinage de roue dans le cas d'un véhicule à une voie selon l'une des revendications précédentes.
